# FASCICULE DE BREVET EUROPEEN

(11) **EP 1 729 033 B1**
(45) Date de publication et mention de la délivrance du brevet: **16.12.2009**
(21) Numéro de dépôt: 06300483.2
(22) Date de dépôt: 17.05.2006
(51) Int. Cl.: F16H 3/093, F16H 57/02

(54) **Boîte de vitesses à double embrayage**
Doppelkupplungsgetriebe
Dual-clutch transmission

(30) Priorité: 01.06.2005 FR 0505540
(43) Date de publication de la demande: 06.12.2006
(73) Titulaire: Renault SAS, 92100 Boulogne Billancourt (FR)
(72) Inventeur: Buannec, Michel, 78480 Verneil sur Seine (FR); Cubaud, Olivier, 78360 Montesson (FR); Da Silva, Paulo, 92800 Puteaux (FR); Picard, Marc, 92500 Rueil Malmaison (FR)
(74) Mandataire: Rougemont, Bernard

(56) Documents cités:
- EP-A- 1 443 244
- WO-A1-2006/008405
- DE-A1- 10 261 723
- DE-A1- 19 853 824
- FR-A- 2 801 010
- FR-A- 2 802 600
- FR-A- 2 872 237
- US-A- 6 067 870
- US-A1- 2001 027 692
- PATENT ABSTRACTS OF JAPAN vol. 2000, no. 20, 10 juillet 2001 (2001-07-10) -& JP 2001 082554 A (KYOWA GOKIN KK), 27 mars 2001 (2001-03-27)

## Description

L'invention a pour objet une boîte de vitesses à double embrayage, en particulier pour un véhicule automobile et concerne, plus spécialement, l'architecture d'une telle boîte.

Pour faire varier le rapport de démultiplication entre l'arbre de sortie du moteur et les roues d'un véhicule, on utilise habituellement une boîte de vitesses à plusieurs rapports, associée à un embrayage. Il est avantageux, en particulier dans le cas d'une boîte à commande automatique, d'utiliser deux embrayages commandant, par exemple, l'un les rapports impairs et l'autre, les rapports pairs, afin de permettre un passage continu d'une vitesse à l'autre.

Par ailleurs, pour améliorer encore le confort de conduite, on est amené à augmenter le nombre de rapports et il est courant, actuellement, de réaliser des boîtes de vitesses à six rapports plus la marche arrière.

Les boîtes de vitesses et les embrayages sont des organes très onéreux qui sont produits en grande série et doivent pouvoir être montés sur différents types de véhicules. Cependant, les dimensions que l'on peut donner à un véhicule, même relativement luxueux, sont limitées et, en même temps, il faut réserver aux passagers un espace spacieux. Il en résulte que la part du volume global réservé à la mécanique est relativement faible alors que la complexité de cette mécanique a tendance à augmenter et il est de plus en plus difficile de loger dans un espace restreint une boîte de vitesses à au moins six rapports, un double embrayage et les différents organes nécessaires pour la commande hydraulique et/ou mécanique, en particulier dans le cas d'une boîte automatique.

Habituellement, une boîte de vitesses comporte quatre arbres parallèles, respectivement deux arbres primaires enfilés l'un dans l'autre et entraînés chacun par un embrayage et deux arbres secondaires portant chacun plusieurs pignons fous pouvant être reliés chacun sélectivement à l'arbre qui le porte par un organe amovible d'accouplement du type à crabotage avec synchroniseur.

Le document FR-A-2 802 600, par exemple, décrit une boîte de vitesses à double embrayage de ce type, comportant deux arbres primaires enfilés l'un dans l'autre et reliés chacun à un embrayage, respectivement un arbre central plein portant, sur une partie arrière, un premier groupe de pignons fixes et enfilé, par sa partie avant, dans un arbre tubulaire portant un second groupe de pignons fixes, et deux arbres secondaires portant chacun un groupe de pignons fous, chaque pignon fou engrenant avec un pignon fixe de l'un ou l'autre des deux arbres primaires et pouvant être solidarisé sélectivement avec l'arbre qui le porte par un organe d'accouplement à crabot, chaque arbre secondaire portant, à son extrémité, un pignon d'attaque d'un différentiel d'entraînement de l'arbre de transmission.

Dans la disposition du document FR-A-2 802 600, on obtient les six rapports de marche avant au moyen de trois paires de pignons fous associées chacune à un crabot double, respectivement quatre pignons portés par un premier arbre secondaire et deux pignons fous portés par le second arbre secondaire, celui-ci portant également un pignon fou de marche arrière.

D'autre part, l'arbre primaire plein porte trois pignons fixes engrenant respectivement avec trois pignons fous du premier arbre secondaire et le pignon fou de marche arrière monté sur le second arbre secondaire, l'arbre primaire creux portant lui-même deux pignons fixes engrenant avec la paire de pignons fous du second arbre secondaire et le quatrième pignon fou du premier arbre. Une telle disposition, qui permet de regrouper, par paires, les pignons fous montés sur les deux arbres secondaires est relativement compacte mais le carter de la boîte de vitesses qui doit englober les deux pignons d'attaque et est prolongé par le carter du double embrayage, présente encore une longueur qui peut se révéler trop importante pour les types de véhicules envisagés actuellement.

Le document EP-A1-1,443,244 qui représente l'état de la technique le plus proche de l'objet de la revendication indépendante 1, décrit une boîte de vitesse comportant une pluralité d'arbres parallèles dont un premier arbre d'entrée X1 tubulaire, un second arbre d'entrée X2 plein qui est enfilé dans l'arbre d'entrée X1, un arbre de renvoi Xs, un arbre intermédiaire Xr et un arbre de sortie Xo qui est apte à entraîner en rotation un différentiel au moyen d'un pignon d'attaque unique.

De plus, la boîte de vitesse comporte un manchon Sg, ou pignon de renvoi, qui est monté libre en rotation sur le premier arbre d'entrée X1 tubulaire et qui porte un premier pignon G1 et un second pignon G2 fixes sur ce renvoi.

Le premier pignon G1 engrène avec un troisième pignon G16 qui est lié en rotation sur l'arbre de renvoi Xs, et le second pignon G2 engrène avec un quatrième pignon G7 qui est lié en rotation sur l'arbre de sortie Xo.

Le manchon Sg est apte à être lié en rotation sur le premier arbre d'entrée X1 tubulaire par un moyen d'accouplement sélectif.

Selon cette boîte de vitesse, le premier arbre d'entrée X1 tubulaire et le second arbre d'entrée X2 sont enfilés axialement les uns dans les autres.

Le document DE-A1-19,853,824 décrit et représente une boîte de vitesse comportant un premier arbre d'entrée tubulaire, un second arbre d'entrée plein qui est concentrique au premier arbre d'entrée, un arbre de renvoi et un arbre de sortie qui est apte à entraîner en rotation un différentiel au moyen d'un pignon d'attaque unique.

Le second arbre d'entrée comporte un pignon de renvoi qui engrène avec un premier pignon fixé sur l'arbre de renvoi et avec un second pignon fixé sur l'arbre de sortie.

Le pignon de renvoi est associé à un moyen d'accouplement sélectif sur le second arbre d'entrée plein.

Le document JP-A-2001 082554 décrit et représente une boîte de vitesse comportant un premier arbre d'entrée plein, un second arbre d'entrée tubulaire et un troisième arbre d'entrée tubulaire, un arbre de renvoi, et un arbre de sortie qui est apte à entraîner en rotation un différentiel au moyen d'un pignon d'attaque unique.

Enfin, le document WO-A1-2006/008405, pertinent pour l'article 54(3) CBE, concerne une boîte de vitesse à arbres parallèles et à deux embrayages.

L'invention a pour objet une nouvelle architecture de boîte de vitesses permettant de diminuer encore l'encombrement de la boîte et la longueur de l'ensemble boîte-embrayage, en particulier pour une boîte à six rapports de marche avant et une marche arrière.

L'invention s'applique donc d'une façon générale, à une boîte de vitesses à double embrayage comportant, à l'intérieur d'un carter, deux groupes de pignons fixes portés respectivement par deux arbres primaires enfilés l'un dans l'autre, respectivement un arbre central et un arbre tubulaire tournant autour d'un même axe central et reliés chacun à un embrayage, et deux lignes secondaires d'attaque d'un différentiel, comportant chacune un arbre secondaire monté rotatif autour d'un axe secondaire parallèle à l'axe central et un groupe de pignons montés fous sur ledit arbre secondaire chaque pignon fou engrenant avec l'un des pignons fixes pour déterminer un rapport de la boîte et pouvant être solidarisé de façon amovible avec l'arbre qui le porte par un organe d'accouplement sélectif.

Conformément à l'invention, l'attaque du différentiel est effectuée par un pignon d'attaque unique monté à une extrémité d'un premier arbre secondaire et le second arbre secondaire est solidarisé en rotation avec le premier arbre par un moyen de liaison cinématique comportant au moins un pignon de renvoi monté fou autour de l'axe central sur l'un des deux arbres primaires.

De façon particulièrement avantageuse, le carter dans lequel est placé le mécanisme comporte un fond portant trois paliers de centrage arrière et un couvercle portant trois paliers de centrage avant, respectivement de l'arbre primaire tubulaire et des deux arbres secondaires, et le palier de centrage avant de l'arbre primaire tubulaire ainsi que le palier avant du premier arbre secondaire sont disposés en retrait par rapport au palier avant du second arbre secondaire et sont montés sur une partie centrale avant du carter reliée à la paroi latérale de celui-ci et formant une face d'appui d'une partie centrale du couvercle, ce dernier comportant une partie périphérique disposée en avant de la partie centrale avec, de part et d'autre de l'axe central, un côté formant un logement pour le palier avant du second arbre secondaire et un côté formant un logement pour le pignon unique d'attaque du différentiel, ledit pignon étant monté en porte-à-faux à l'extrémité avant du premier arbre secondaire, en avant du palier de centrage avant dudit arbre.

Selon l'invention, le moyen de liaison cinématique entre les deux arbres secondaires comporte un pignon de renvoi monté fou sur l'un des deux arbres primaires et engrenant avec deux pignons montés fixes, respectivement, sur chacun des deux arbres secondaires. L'arbre primaire tubulaire est enfilé sur une première partie avant de l'arbre primaire central qui comporte une seconde partie arrière portant au moins un pignon fixe et le pignon de renvoi est monté fou sur un roulement monté sur l'arbre primaire central, entre une extrémité arrière de l'arbre primaire tubulaire et un pignon fixe de l'arbre primaire central.

Selon une autre caractéristique préférentielle permettant de réduire l'encombrement de la boîte, le second arbre secondaire est constitué de deux parties enfilées l'une dans l'autre, respectivement une partie centrale montée rotative sur un palier arrière porté par le fond du carter, et sur un palier avant porté par le couvercle, et une partie tubulaire montée rotative sur deux roulements écartés portés par la partie centrale, avec un organe sélectif d'accouplement synchronisé entre la partie centrale et la partie tubulaire.

De préférence, le pignon de renvoi monté fou sur l'arbre primaire central engrène, d'un côté avec un premier pignon monté fixe sur le premier arbre secondaire, dans la partie centrale de ce dernier, et, de l'autre côté, avec un second pignon monté fixe sur la partie tubulaire du second arbre secondaire.

Dans un mode de réalisation préférentiel, le pignon fixe d'entraînement en rotation du premier arbre secondaire portant le pignon d'attaque unique est monté dans une partie centrale dudit premier arbre secondaire et le second arbre secondaire est constitué de deux parties enfilées l'une dans l'autre, respectivement une partie centrale montée rotative, à ses extrémités, sur deux paliers, respectivement avant et arrière et une partie tubulaire montée rotative sur la partie centrale et s'étendant entre une extrémité arrière sur laquelle est monté un pignon fixe engrenant avec le pignon de renvoi, et une extrémité avant portant un organe amovible d'accouplement sélectif avec ladite partie centrale du second arbre secondaire. De plus, cette dernière porte à son extrémité arrière un pignon d'entraînement fixe interposé entre le palier arrière et l'extrémité arrière de la partie tubulaire dudit arbre secondaire et engrenant avec un pignon fixe de l'arbre primaire central pour la transmission de mouvement depuis le premier embrayage jusqu'à un arbre mené, en passant successivement par l'arbre primaire et son pignon fixe, le pignon fixe de la partie centrale du second arbre secondaire, l'organe d'accouplement avec la partie tubulaire dudit second arbre, le pignon monté fixe sur celle-ci, le pignon de renvoi, le pignon fixe du premier arbre secondaire et le pignon d'attaque porté par celui-ci.

Selon une autre caractéristique préférentielle, le pignon de renvoi est monté fou autour de l'axe central entre les deux groupes de pignons fixes montés respectivement, vers l'arrière sur la seconde partie de l'arbre primaire central et vers l'avant sur l'arbre primaire tubulaire, ledit pignon fou engrenant d'un côté avec un pignon d'entraînement monté fixe dans la partie centrale du premier arbre secondaire et, de l'autre, avec un pignon d'entraînement monté fixe sur une extrémité arrière de la partie tubulaire du second arbre secondaire.

L'invention s'applique spécialement à une boîte de vitesses comportant six rapports de marche avant et un rapport de marche arrière. Dans ce cas, le premier arbre secondaire porte, de chaque côté de son pignon fixe d'entraînement, un organe d'accouplement sélectif coopérant avec l'un ou l'autre de deux pignons fous pour en commander sélectivement la solidarisation en rotation avec ledit premier arbre secondaire, les deux pignons fous montés en arrière du pignon fixe d'entraînement engrenant chacun avec un pignon fixe de l'arbre primaire central et les deux pignons fous montés en avant du pignon fixe d'entraînement engrenant chacun avec un pignon fixe de l'arbre primaire tubulaire.

Par ailleurs, la partie centrale du second arbre secondaire porte, de part et d'autre de la partie tubulaire, à une extrémité arrière, un pignon fixe engrenant avec un pignon fixe de l'arbre primaire central et, à une extrémité avant, un organe d'accouplement sélectif coopérant sélectivement, vers l'avant avec un pignon fou de commande de marche arrière et, vers l'arrière, avec une extrémité avant de la partie tubulaire dudit second arbre secondaire, sur laquelle est monté fou un pignon coopérant avec un organe d'accouplement sélectif et engrenant avec un pignon fixe de l'arbre primaire tubulaire.

L'invention couvre également une disposition particulière du pignon fou de marche arrière qui est relié cinématiquement à un pignon fixe de l'arbre primaire tubulaire par un pignon jumelé tournant fou autour d'un quatrième axe parallèle à l'axe central, et portant deux dentures écartées axialement, respectivement une denture engrenant avec le pignon fou de marche arrière et une denture engrenant avec un pignon fixe de l'arbre primaire tubulaire.

Dans un mode de réalisation préférentiel, les deux paires de pignons tournant fous autour de l'axe du premier arbre secondaire et engrenant respectivement avec des pignons fixes des deux arbres primaires correspondent aux rapports de 1 er, 5ème, 6ème et 2ème vitesse alors que les trois pignons tournant fous autour de l'axe du second arbre secondaire et engrenant respectivement avec un pignon fixe de l'un ou l'autre des deux arbres primaires correspondent aux rapports de 3ème, 4ème et marche arrière.

D'autre part, les deux pignons fous montés sur le premier arbre secondaire en arrière du pignon fixe d'entraînement engrènent avec deux pignons fixes de l'arbre primaire central pour déterminer les rapports de 1 ère et de 5ème vitesses, et les deux pignons fous montés en avant du pignon fixe d'entraînement engrènent avec deux pignons fixes de l'arbre primaire tubulaire pour déterminer les rapports de 6ème et 2ème.Les pignons montés respectivement à l'arrière et à l'avant de la partie centrale du second arbre secondaire et engrenant avec des pignons fixes, respectivement de l'arbre primaire central et de l'arbre primaire tubulaire déterminent respectivement les rapports de 3ème et de marche arrière, et le pignon monté fou sur la partie tubulaire du second arbre primaire et engrenant avec un pignon fixe de l'arbre primaire tubulaire correspond au rapport de 4ème.

Une telle architecture de boîte de vitesses permet de réduire nettement l'encombrement de celle-ci et, par conséquent, de faciliter son implantation dans la partie du véhicule réservée au mécanisme, même si celle-ci est relativement réduite.

Par ailleurs, du fait que la longueur globale de l'ensemble boîte-embrayage, peut être réduite, l'invention peut s'appliquer avantageusement à un embrayage de type sec ou de type humide, des joints d'étanchéité pouvant être placés judicieusement de façon à séparer les deux types d'huile utilisées dans un embrayage humide.

D'autres caractéristiques et avantages de l'invention apparaiteront dans la description suivante d'un mode de réalisation particulier de celle-ci, en se référant aux dessins annexés sur lesquels :
La figure 1 est une vue de détail en coupe à plans rabattus, selon la ligne 1-1 de la figure 2, d'une boîte de vitesses à double embrayage sec.
La figure 2 est une vue schématique, en coupe transversale, de l'ensemble des pignons.
La figure 3 est une vue de détail, en coupe à plans rabattus, selon la ligne I-I de la figure 2, d'une boîte de vitesses à double embrayage humide.

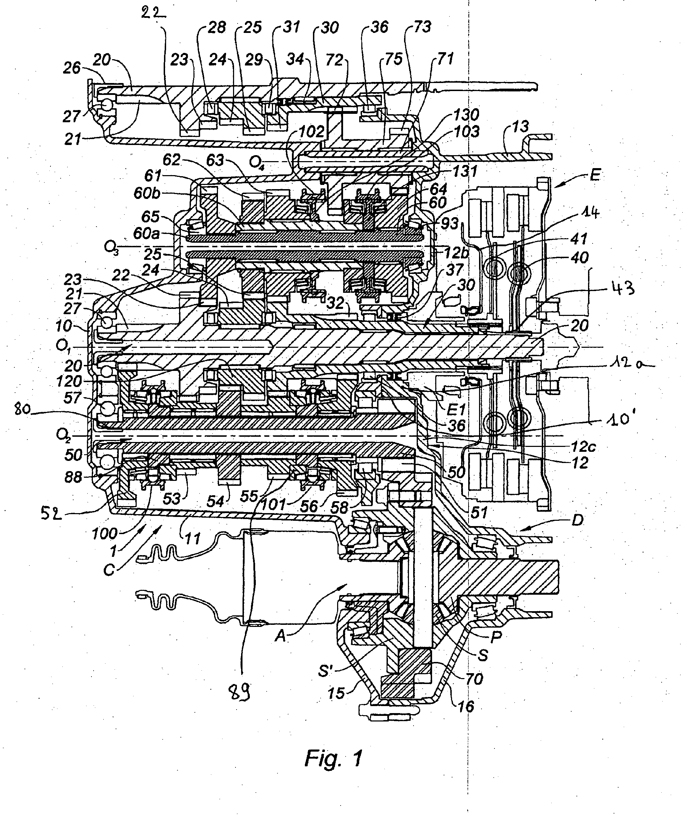

Sur la figure 1 on a représenté, en couple à plan rabattu, une boîte de vitesses selon l'invention comportant, de façon connue :
   - deux arbres primaires co-axiaux enfilés l'un dans l'autre et tournant autour d'un axe central O1 respectivement un arbre primaire plein 20 et un arbre primaire creux 30 de forme tubulaire, l'ensemble étant monté rotatif sur un carter C, par l'intermédiaire d'un palier avant 36 monté sur l'arbre tubulaire 30 et d'un palier arrière 27 monté à l'extrémité arrière de l'arbre primaire plein 20 ;
   - un premier arbre secondaire 50 monté rotatif dans le carter C autour d'un premier axe secondaire 02 parallèle à l'axe central O1 et porté par deux paliers, respectivement un palier avant 58 et un palier arrière 57 ;
   - un second arbre secondaire 60 monté rotatif autour d'un second axe secondaire 03 parallèle à l'axe central O1 sur deux paliers, respectivement un palier avant 93 et un palier arrière 65.

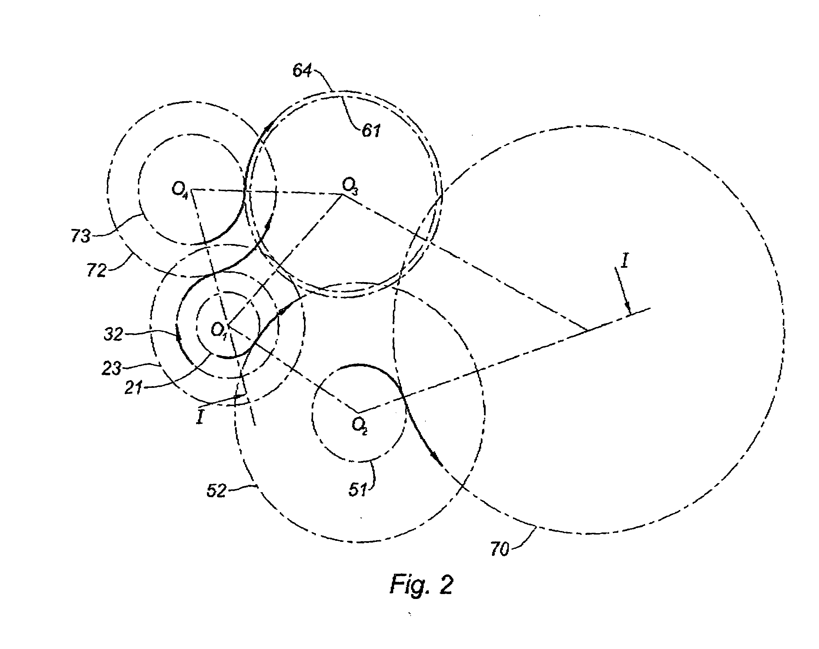

Comme le montre la figure 2, les axes O1 des deux arbres primaires 20, 30 et 02, 03 des deux arbres secondaires 50, 60 forment un triangle dont l'angle au sommet O1 est proche de 90°.

De façon également connue, cette boîte de vitesses sert à transmettre, avec un rapport variable, le couple moteur à un arbre mené A, par exemple l'arbre d'entraînement d'un pont non représenté, par l'intermédiaire d'un différentiel D comportant deux pignons primaires P sur lesquels engrènent deux pignons secondaires S montés sur une cage S' entraînée en rotation, autour de l'axe de l'arbre mené A, par une couronne 70.

D'une façon générale, chacun des deux arbres primaires 20, 30 porte un groupe de pignons fixes engrenant avec des pignons montés fous sur l'un et l'autre des arbres secondaires 50, 60, de façon à déterminer les différents rapports de la boîte en fonction du rapport des diamètres respectifs, chaque pignon fou pouvant être solidarisé de façon amovible avec l'arbre qui le porte par un organe d'accouplement sélectif constitué d'un moyen de crabotage indépendant.

Par exemple, chaque pignon fou peut être muni d'une denture, d'une rondelle crabot rapportée, d'un cône de synchroniseur et de multi-anneaux de synchroniseur empilés sur le cône des pignons fous. L'ensemble peut ainsi être solidarisé en rotation sélectivement avec un moyeu de synchroniseur fixé sur l'arbre.

Par ailleurs, l'embrayage E qui transmet le couple du moteur à la ligne primaire est un double embrayage comportant un premier embrayage 40 d'entraînement de l'arbre central plein 20 et un second embrayage 41 d'entraînement de l'arbre tubulaire 30, les deux embrayages 40, 41 pouvant être actionnés alternativement en passant par un état où il transmettent le couple moteur tous les deux afin de permettre au moins un changement de rapport sans discontinuité du couple transmis aux roues du véhicule.

Selon le mode de réalisation de l'invention illustré par les figures, le premier arbre primaire 20 est monté co-axialement au second arbre primaire creux 30 par l'intermédiaire de deux cages à aiguilles centrales 34 et 35. Ces deux arbres primaires 20 et 30 sont montés à rotation dans le carter C et centrés par deux roulements 27 (roulement à billes) et 36 (roulement à rouleaux). Le roulement à billes 27 possède un anneau élastique d'arrêt encaissant les efforts axiaux dus aux hélices des dentures des lignes primaires et un écrou 26 assurant le serrage du roulement à billes 27.

Le roulement avant 36, du type à rouleaux, est monté, selon une caractéristique de l'invention, dans la partie centrale de l'arbre primaire tubulaire 30.

Le carter C forme un boîtier 1 dans lequel est placé l'ensemble du mécanisme, avec un fond 10, une paroi latérale 11 et une face avant 10' sur laquelle est appliqué un couvercle 12.

Le fond 10 du carter comporte trois logements dans lesquels sont placés les paliers arrière 27, 57, 65 des trois arbres 20, 50, 60, le palier arrière 65 du second arbre secondaire 60 étant cependant décalé vers l'avant de la façon décrite plus loin.

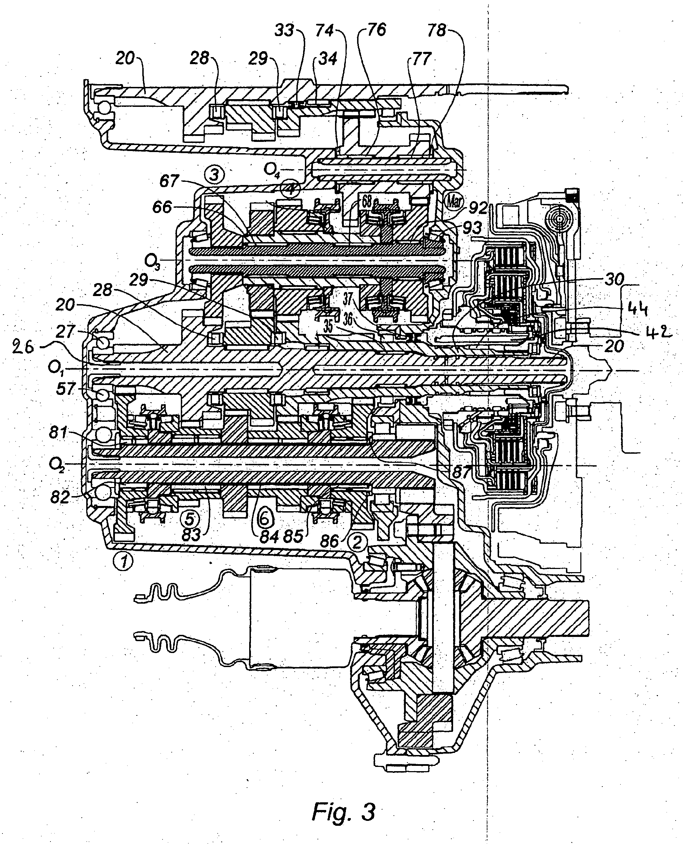

Le palier avant 36 portant l'arbre primaire tubulaire 30 est monté dans un alésage central de la face avant 10' du boîtier 1, sur lequel vient s'appliquer la partie centrale 12a du couvercle 12 qui est décalée vers l'arrière par rapport à sa partie périphérique 12b. En effet, comme le montrent les figures 1 et 3, la face avant 10' du boîtier 1 qui porte les paliers de centrage avant 36 de l'arbre primaire tubulaire 30 et 58 du premier arbre secondaire 50 est placée en retrait par rapport au palier de centrage avant 93 du second arbre secondaire 60 qui est monté dans un logement de la partie périphérique 12b du couvercle 12.

De l'autre côté de l'axe central O1, cette partie périphérique 12b du couvercle 12 forme un logement 12c dans lequel vient se placer le pignon 51 d'attaque de la couronne 70 du différentiel. Ce pignon d'attaque 51 est donc placé en porte-à-faux sur l'extrémité avant du premier arbre secondaire 50 et se trouve ainsi à l'extérieur de la face avant 10' du boîtier 1 portant le palier avant 58 du premier arbre secondaire 50.

En effet, selon une caractéristique essentielle de l'invention, la couronne 70 du différentiel D est attaquée par un pignon unique 51 porté par le premier arbre secondaire 50 qui est relié cinématiquement au second arbre secondaire 60 par un pignon de renvoi 120 monté fou autour de l'axe central O1 sur l'un des deux arbres primaires.

Dans le mode de réalisation préférentiel représenté sur les figures, le pignon fou 120 est porté par l'arbre primaire central 20 par l'intermédiaire d'un palier à aiguilles et comporte deux dentures fixes 24, 25 qui engrènent respectivement avec un pignon fixe 54 du premier arbre primaire 50 et avec un pignon fixe 62 du second arbre primaire 60 de façon à transmettre au pignon d'attaque unique 51 porté par le premier arbre 50, un couple de rotation appliqué, selon le rapport de démultiplication, sur le second arbre secondaire 60.

A cet effet, l'arbre primaire plein 20 comporte trois pignons fixes, de gauche à droite 21, 22 et 23 qui sont monobloc avec l'arbre 20, leur denture étant taillée directement. Le premier pignon fixe 21 est situé entre le roulement à billes 27 et le deuxième pignon fixe 22. Le troisième pignon fixe 23, qui est jumelé avec le pignon fixe 22, se situe entre ce dernier et le pignon fou de renvoi 120 qui comporte deux dentures fixes jumelées 24 et 25. Le pignon fou de renvoi 120 tourne axialement sur une cage à aiguille portée par l'arbre primaire plein 20. Il est situé entre deux butées à aiguilles 28 et 29 : la première est en contact avec la denture 23 de l'arbre primaire plein 20 et la deuxième en contact avec la denture 31 de l'arbre primaire creux 30.

Dans le cas d'un embrayage sec représenté sur la figure 1, un premier joint d'étanchéité 37 interposé entre la partie centrale 12a du couvercle 12 et l'arbre primaire tubulaire 30 et un second joint d'étanchéité 43 interposé entre les extrémités avant des deux arbres primaires 20, 30, assure le maintien étanche de l'huile contenue dans le carter C et dans laquelle baigne l'ensemble du mécanisme.

Dans le cas d'un embrayage humide représenté sur le figure 3, une cage à aiguilles 44 centrée dans un moyeu d'alimentation 42 de l'embrayage E assure le centrage de l'arbre primaire creux 30 sur son extrémité avant. Dans ce cas, un joint d'étanchéité 33 situé après la butée à aiguilles 29 de maintien axial du pignon de renvoi 120 assure la fonction d'étanchéité entre les deux huiles contenues, respectivement, dans la boîte de vitesses et dans l'embrayage et qui, comme on le sait, sont différentes.

Le centrage de l'arbre primaire creux 30 sur l'arbre primaire central 20 est assuré par deux cages à aiguilles, respectivement une première cage 34 située juste en avant du joint d'étanchéité 33 et une seconde cage 35 située au niveau de la face avant 10' du carter portant les roulements avant 36 de l'arbre primaire et 58 du premier arbre secondaire.

L'arbre primaire creux 30 comporte deux pignons fixes 31 et 32 dont la denture est taillée directement. Le premier pignon fixe 31 est situé au dessus du joint d'étanchéité 33. Le deuxième pignon fixe 32 est situé juste devant le roulement à rouleaux 36. Un joint d'étanchéité 37, centré sur le carter C et monté sur l'arbre primaire creux 30, assure une étanchéité des deux huiles des compartiments embrayage et pignonnerie. Il est situé entre le roulement à rouleaux 36 et le moyeu d'alimentation 42.

Selon une autre caractéristique de l'invention, la ligne secondaire dite principale 50 est montée à rotation dans le carter C sur deux roulements 57 (roulement à billes) et 58 (roulement à rouleaux). Elle comporte :
- quatre pignons fous 52, 53, 55 et 56, munis chacun d'une denture, d'une rondelle crabot rapportée, d'un cône de synchroniseur et de multi-anneaux de synchroniseur empilés sur le cône des pignons fous. Les pignons fous tournent axialement sur des cages à aiguilles et des entretoises ;
- deux moyeux de synchroniseur 88 et 89 situés respectivement, l'un, 88, entre deux entretoises 82 et 83, et l'autre, 89 entre deux entretoises 84 et 85. Ils sont munis de cannelures externes pour faire coulisser le baladeur de synchro, ayant la fonction de crabotage, et d'une cannelure interne pour son entraînement en rotation. Ils possèdent également trois rainures équidistantes pour loger le système d'armement ;
- un pignon fixe 54, muni de cannelures internes et d'une denture externe, situé entre les deux entretoises 83 et 84 ;
- un premier dispositif de crabotage double 100 permettant de lier sélectivement en rotation à l'arbre secondaire 50 le pignon fou 52 pour obtenir le rapport de première ou le pignon fou 53 pour obtenir le rapport de cinquième ;
- un deuxième dispositif de crabotage double 101 permettant de lier sélectivement en rotation à l'arbre secondaire 50 le pignon fou 55 pour obtenir le rapport de sixième ou le pignon fou 56 pour obtenir le rapport de deuxième ;
- un écrou 80 assurant le serrage de la ligne secondaire principal 50 ;
- une rondelle 81, située entre le roulement à billes 57 et l'entretoise 82, et assurant l'appui axial du pignon fou 52 ;
- une entretoise 86, située entre l'entretoise 85 et le roulement à rouleaux 58, qui comporte un dégagement pour l'anneau élastique 87 arrêtant axialement le roulement à rouleaux 58 ;
- le roulement à billes 57 qui possède un anneau élastique d'arrêt encaissant les efforts axiaux dus aux hélices des dentures de la ligne secondaire principale 50.

De façon particulièrement avantageuse, le second arbre secondaire 60 qui, dans le mode de réalisation préférentiel, correspond au rapport de 3ème, 4ème et marche arrière, est beaucoup plus court que le premier arbre secondaire 50 et est décalé vers l'avant par rapport à celui-ci.

A cet effet, ce second arbre secondaire 60 est constitué de deux parties enfilées l'une dans l'autre, respectivement interne 60a et externe 60b. La partie interne 60a forme un arbre central monté rotatif autour de l'axe 03 sur deux paliers, respectivement un palier arrière 65 porté par le fond 10 du carter et un palier avant 93 porté par le couvercle 12. La partie externe forme un arbre intermédiaire tubulaire 60b enfilé sur la partie centrale 60a et monté rotatif autour de l'axe 03 sur deux cages à aiguilles 67, 68 écartées l'une de l'autre.

Ces deux arbres enfilés l'un dans l'autre et montés rotatifs dans le carter C sur deux roulements coniques 65 et 93, forment une deuxième ligne secondaire dite auxiliaire 60 qui comporte :
un pignon fixe 61, muni de cannelures internes et d'une denture externe, qui est monté fixe sur l'extrémité arrière de l'arbre central 60a, entre un épaulement de celui ci et le roulement conique 65.
un pignon de marche arrière 64 monté fou sur l'extrémité avant de l'arbre central 60a, entre le roulement conique 93 et un moyeu de synchroniseur 131 rapporté, muni de cannelures externes pour faire coulisser le baladeur de synchro, et ayant la fonction de crabotage. Il possède également trois rainures équidistantes pour loger le système d'armement.
   - un premier dispositif de crabotage double 103 monté sur le moyeu de synchroniseur 131 et permettant de lier sélectivement en rotation à l'arbre secondaire central 60a, soit l'arbre intermédiaire 60b pour obtenir le rapport de quatrième, soit le pignon fou 64 pour obtenir le rapport de marche arrière.
      l'arbre intermédiaire 60b monté rotatif sur l'arbre secondaire central 60a par l'intermédiaire de cages à aiguilles 67,68, et s'étend entre le pignon fixe 61 et le moyeu 131.
un pignon fixe 62 lié en rotation par des cannelures internes à l'arbre intermédiaire 60b et porte une denture externe. Il est en appui sur un épaulement de l'arbre intermédiaire 60b et arrêté axialement par un anneau d'arrêt 66.
- un pignon 63 tournant fou autour de l'axe 03 sur l'arbre intermédiaire 60b par l'intermédiaire d'une cage à aiguilles. Ce pignon fou 63 est situé entre le pignon fixe 62 et le moyeu 130. Il est muni d'une denture, d'une rondelle crabot, d'un cône de synchroniseur et de multi-anneaux de synchroniseur empilés sur le cône des pignons fous.
- un moyeu de synchroniseur 130 rapporté, situé entre le pignon fou 63 et un anneau d'arrêt. Il est muni de cannelures externes pour faire coulisser le baladeur de synchro, ayant la fonction de crabotage et possède également trois rainures équidistantes pour loger le système d'armement.
- un dispositif de crabotage simple 102 qui permet de lier sélectivement en rotation à l'arbre intermédiaire 60b le pignon fou 63.
- une rondelle 92, située entre le roulement conique 93 et un épaulement de l'arbre central 60a, assure l'appui axial du pignon fou 64.

Enfin, la ligne intermédiaire de marche arrière comporte un pignon fou 75 monté à rotation sur un arbre fixe 71 par l'intermédiaire de deux cages à aiguilles 76 et 77. Elle comporte :
- un pignon fou 75 muni de deux dentures fixes 72 et 73 dont la denture est taillée directement. Les dentures 72 et 73 sont jumelées.
- deux butées à aiguilles 74 et 78 encaissant les vitesses différentielles de la ligne.

La figure 2 illustre le cheminement du couple moteur jusqu'à la couronne de différentiel sur le rapport de marche arrière. Le couple appliqué par le moteur est transmis à l'arbre primaire creux 30 par l'intermédiaire de l'embrayage 41 fermé, puis par la denture fixe 32 au premier pignon fixe 72 du pignon fou 75. Celui-ci le transmet au pignon fou 73 car les dentures 72 et 73 sont jumelées. Le couple est transmis, ensuite, au pignon fou de marche arrière 64 par l'intermédiaire du crabot double 103 en position craboté sur l'arbre central 60a, qui le transmet successivement au pignon fixe 61, puis au pignon fixe 23, au pignon fixe 21, au pignon fou 52 et à l'arbre secondaire principal 50 par l'intermédiaire du crabot double 100 en position craboté sur le pignon fou 52, le couple étant enfin transmis à la couronne 70 du différentiel par l'intermédiaire du pignon d'attaque 51.

Le cheminement du couple du moteur à la couronne de différentiel selon le rapport de première est le suivant. Le couple est transmis du moteur à l'arbre primaire 20 par l'embrayage 40 fermé, puis de la denture fixe 21 au pignon fou 52, puis à l'arbre secondaire 50 par le crabot double 100 en position craboté sur le pignon fou 52, puis de l'arbre secondaire 50 au pignon d'attaque 51 qui le transmet à la couronne 70.

Le cheminement du couple est similaire pour le rapport de deuxième, cinquième et sixième puisque les pignons fous 53, 55 et 56 sont portés par l'arbre secondaire principal 50.

Le cheminement du couple du moteur à la couronne de différentiel selon le rapport de troisième est le suivant. Le couple est transmis du moteur à l'arbre primaire 20 par l'embrayage 40 fermé, puis de la denture fixe 23 au pignon fixe 61, puis au pignon fou 62 par l'intermédiaire du crabot double 103 en position crabotée sur l'arbre tubulaire 60a, puis du pignon fou 62 à la denture 25 du pignon de renvoi 120, puis à la denture jumelée 24 qui engrène sur le pignon fixe 54 qui transmet le couple à l'arbre secondaire principal 50 et au pignon 51 d'attaque de la couronne 70 du différentiel D.

Le cheminement du couple est similaire pour le rapport de quatrième puisque le pignon fou 63 est porté par l'arbre secondaire intermédiaire 60b, lui-même porté par l'arbre central 60a de la ligne secondaire auxiliaire 60.

Enfin, il faut souligner que le passage d'un rapport donné au rapport immédiatement supérieur fait appel dans tous les cas à un changement d'embrayage et d'arbre primaire. C'est en effet la condition de réalisation des changements de rapport sans discontinuité du couple moteur, par actionnement simultané des deux embrayages.

En résumé, les arbres primaires 20, 30 portent plusieurs dentures fixes 21, 22, 23, 31 et 32 engrenant avec des pignons fous 52, 53, 55, 56, 61, 63 et 72, de l'un et l'autre des arbres secondaires 50, 60 et de l'arbre intermédiaire 75, avec au moins cinq dentures fixes 21, 22, 31 et 32 qui engrènent simultanément avec un pignon fou 52, 53, 55, 56, 61 et 63 de chaque arbre secondaire 50, 60, au moins une denture fixe 31 qui engrène simultanément avec un pignon fou 55 et 63 de chaque arbre secondaire 50, 60 et une denture fixe 32 qui engrène simultanément avec un pignon fou de marche avant 56 et avec le pignon intermédiaire de marche arrière 72.

Cette disposition permet d'obtenir six rapports avant et un rapport de marche arrière avec seulement trois dentures fixes 21, 22, 23, sur le premier arbre primaire plein 20 pour obtenir les rapports impairs et deux dentures fixes 31 et 32 sur le second arbre primaire creux 30 pour obtenir les rapports pairs et le rapport de marche arrière.

Grâce à l'imbrication des pignons fixes des arbres primaires et des pignons fous des deux arbres secondaires, ainsi que l'utilisation d'un arbre secondaire en deux parties enfilées l'une dans l'autre, une telle boîte de vitesses est particulièrement compacte et permet, avec un encombrement axial du même ordre qu'une boîte classique à quatre rapports, d'obtenir six rapports de marche avant et un rapport de marche arrière.

D'autre part, la transmission du couple par un pignon d'attaque unique placé en porte-à-faux à l'extrémité avant du premier arbre secondaire permet de raccourcir et de décaler vers l'avant le roulement 93 du second arbre secondaire 60 par rapport au roulement 36 de l'arbre primaire 30 et, ainsi, de ménager, sur la face avant du carter, une partie centrale en retrait dans laquelle peut s'engager une partie E₁ de liaison avec le boîtier de l'embrayage E dont le fond prend appui sur la partie périphérique 12b du couvercle 12 du carter C. Ce dernier peut être prolongé vers l'avant par une paroi latérale 13 entourant l'axe central O₁ et formant un espace creux dans lequel vient s'insérer le boîtier de l'embrayage E qui prend appui, par sa face arrière 14, sur la partie périphérique 12b du couvercle 12 du carter C.

Par ailleurs, le différentiel D qui engrène avec le pignon d'attaque unique 51 peut être décalé vers l'avant et est placé dans un boîtier rapporté ayant un fond 15 qui constitue une prolongation de la paroi latérale 11 du carter de la boîte et un couvercle 16 qui se rattache au couvercle 12 du carter et à la paroi latérale 13.

Bien entendu, l'invention ne se limite pas aux détails du mode de réalisation préférentiel qui vient d'être décrit et pourrait faire l'objet de variantes sans s'écarter du cadre de protection de l'invention.

Par exemple, dans le mode de réalisation représenté sur la figure 2, les dispositions relatives des axes O₁, O₂, O₃, O₄ pourraient être différentes en adaptant les diamètres des différents pignons engrenant l'un dans l'autre. D'ailleurs, les rapports de diamètre permettant d'obtenir les différentes vitesses pourraient également être modifiés, de même que la répartition des différents rapports de la boîte entre les pignons fous des deux arbres secondaires.

Par ailleurs, comme le montrent les figures 1 et 3, la boîte de vitesses selon l'invention peut être adaptée soit à un embrayage sec tel que représenté sur la figure 1, soit à un embrayage humide tel que représenté sur la figure 3. Dans ce cas, le double embrayage humide est porté par un moyeu d'alimentation 42 monté rotatif, par l'intermédiaire d'une cage à aiguilles 44, sur l'extrémité avant de l'arbre primaire creux 30.

De plus, l'invention s'applique spécialement à une boîte de vitesses à six rapports de marche avant et un rapport de marche arrière mais les mêmes dispositions, en particulier l'utilisation d'un pignon d'attaque unique monté en porte-à-faux à l'extrémité avant de l'un des arbres secondaires, pourraient être adaptées à d'autres types de boîtes de vitesses avec un nombre différent de rapports.

## Revendications

1. Boîte de vitesses à double embrayage comportant, à l'intérieur d'un carter, deux groupes de pignons fixes (21, 22, 23) (31, 32) portés respectivement par deux arbres primaires enfilés l'un dans l'autre, respectivement un arbre central (20) et un arbre tubulaire (30) tournant autour d'un même axe central (O1) et reliés chacun à un embrayage (40, 41), et deux lignes secondaires d'attaque d'un différentiel (D), comportant chacune un arbre secondaire (50, 60) tournant autour d'un axe secondaire (O2, O3) parallèle à l'axe central (O1) et portant un groupe de pignons fous, chaque pignon fou (52, 53, 55, 56) (63, 64) engrenant avec l'un des pignons fixes (21, 22, 23) (31, 32) pour déterminer un rapport de la boîte et pouvant être solidarisé de façon amovible avec l'arbre (50, 60) qui le porte par un organe d'accouplement sélectif (100, 101, 102, 103), où l'attaque du différentiel (D) est effectuée par un pignon d'attaque unique (51) monté à une extrémité d'un premier arbre secondaire (50) et le second arbre secondaire (60) est solidarisé en rotation avec ce premier arbre secondaire (50) par un moyen de liaison cinématique comportant au moins un pignon de renvoi (120) monté fou autour de l'axe central (O1) sur l'un des deux arbres primaires (20, 30) et engrenant avec deux pignons (54, 62) montés fixes, respectivement, sur chacun des deux arbres secondaires (50, 60) où, le mécanisme, constitué essentiellement par lesdits arbres et lesdits pignons, est placé à l'intérieur d'un carter (C) ayant un couvercle (12) formant une face avant, un fond (10) formant une face arrière et une paroi latérale (11), **caractérisée par le fait que** le pignon de renvoi (120) est monté fou sur l'arbre primaire central (20), entre une extrémité arrière de l'arbre primaire tubulaire (30) et un desdits pignons fixes (21, 22, 23) de l'arbre primaire central (20).

2. Boîte de vitesses selon la revendication 1, **caractérisée par le fait que** le pignon de renvoi (120) est monté entre le premier groupe de pignons fixes (21, 22, 23) monté sur l'arbre primaire central (20) et le second groupe de pignons fixes (31, 32) monté sur l'arbre primaire tubulaire (30).

3. Boîte de vitesses selon l'une quelconque des revendications précédentes, **caractérisée par le fait que** le pignon fixe (54) d'entraînement en rotation du premier arbre secondaire (50) est monté dans une partie centrale dudit premier arbre secondaire (50).

4. Boîte de vitesses selon la revendication 1, **caractérisée par le fait que** le second arbre secondaire (60) comporte :
- une partie centrale (60a) qui est montée rotative autour du second axe secondaire (O3) à ses extrémités, sur deux paliers, respectivement avant (93) et arrière (65),
- une partie externe tubulaire (60b) qui est enfilée sur la partie centrale (60a), qui est montée rotative autour du second axe secondaire (O3) sur la partie centrale (60a) au moyen de deux roulements (67,68) et qui s'étend entre une extrémité arrière sur laquelle est monté le pignon fixe (62) engrenant avec le pignon de renvoi (120), et une extrémité avant, ladite partie centrale (60a) étant apte à être couplée avec ladite partie externe tubulaire (60b) par un desdits organe d'accouplement sélectif (103) du second arbre secondaire (60).

5. Boîte de vitesses selon la revendication 4, **caractérisée par le fait que** la partie centrale (60a) du second arbre secondaire (60) porte, à son extrémité arrière, un pignon d'entraînement fixe (61) qui est interposé entre le palier arrière (65) de la partie centrale (60a) et l'extrémité arrière de la partie externe tubulaire (60b) dudit second arbre secondaire (60) et qui engrène avec un pignon fixe (23) de l'arbre primaire central (20) pour la transmission d'un couple depuis le premier embrayage (40) jusqu'à un arbre mené (A), en passant successivement par le pignon fixe (23) de l'arbre primaire central (20), ledit pignon fixe (61) de la partie centrale (60a) du second arbre secondaire (60), l'organe d'accouplement (103) de la partie centrale (60a) avec la partie tubulaire (60b) dudit second arbre secondaire (60), le pignon (62) monté fixe sur ladite partie tubulaire (60b), le pignon de renvoi (120), le pignon fixe (54) du premier arbre secondaire (50) et le pignon d'attaque (51), ledit pignon fixe (61) correspondant au rapport de 3ème vitesse.

6. Boîte de vitesses selon les revendications 1 et 5, **caractérisée par le fait que** le second groupe de pignons fous (63, 64) porté par le second arbre secondaire (60) comporte :
- un pignon fou (64) de commande de marche arrière qui est apte à être accouplé avec la partie centrale (60a) du second arbre secondaire (60) par l'organe d'accouplement (103) de la partie centrale (60a) avec la partie tubulaire (60b) dudit second arbre (60), et qui correspond au rapport de marche arrière, et
- un autre pignon fou (63) qui est apte à être accouplé sur la partie externe tubulaire (60b) du second arbre secondaire (60) par un autre organe d'accouplement (102) et qui correspond au rapport de 4ème vitesse.

7. Boîte de vitesses selon la revendication 6, **caractérisée par le fait que** le pignon fou (64) de commande de marche arrière est relié cinématiquement à un desdits pignons fixes (32) de l'arbre primaire tubulaire (30) par l'intermédiaire d'un pignon jumelé (75) qui tourne fou autour d'un quatrième axe (O4) parallèle à l'axe central (O1), et qui porte deux dentures écartées axialement, respectivement une denture (77) engrenant avec le pignon fou (64) de marche arrière et une denture (72) engrenant avec ledit pignon fixe (32) de l'arbre primaire tubulaire (30).

8. Boîte de vitesses selon l'une quelconque des revendications précédentes, **caractérisée par le fait que** le premier arbre secondaire (50) porte :
- un premier organe d'accouplement sélectif (88) qui est apte à accoupler sélectivement deux pignons fous (52, 53) arrière du premier groupe de pignons fous (52, 53, 55, 56) sur le premier arbre secondaire (50) associé, lesdits deux pignons fous (52, 53) arrière étant montés à l'arrière du pignon fixe d'entraînement (54) du premier arbre secondaire (50) pour déterminer les rapports de 1 ère et de 5ème vitesse ;
- un second organe d'accouplement sélectif (89) qui est apte à accoupler sélectivement deux pignons fous (55, 56) avant du premier groupe de pignons fous (52, 53, 55, 56) sur le premier arbre secondaire (50) associé, lesdits deux pignons fous (55, 56) avant étant montés à l'avant du pignon fixe d'entraînement (54) du premier arbre secondaire (50) pour déterminer les rapports de 6ème et 2ème vitesse.

9. Boîte de vitesses selon la revendication 1, **caractérisée par le fait que** ledit fond (10) porte trois paliers de centrage arrière, respectivement (27) de l'arbre primaire central (20) et (57,65) des deux arbres secondaires (50, 60) et le couvercle (12) porte trois paliers de centrage avant, respectivement (36) de l'arbre primaire tubulaire (30) et (58, 93) des deux arbres secondaires (50, 60), et que le palier de centrage avant (36) de l'arbre primaire tubulaire (30) et le palier avant (58) du premier arbre secondaire (50) sont disposés en retrait vers l'arrière par rapport au palier avant (93) du second arbre secondaire (60) et sont montés sur une partie centrale interne avant (10') du carter (C), la partie centrale interne avant (10') étant reliée à la paroi latérale (11) et formant une face d'appui d'une partie centrale (12a) du couvercle (12).

10. Boîte de vitesses selon la revendication 9, **caractérisée par le fait que** le couvercle (12) comporte une partie périphérique (12b) qui est disposée en avant de la partie centrale (12a) avec, de part et d'autre de l'axe central (O1), un côté formant un logement pour le palier avant (93) du second arbre secondaire (60) et un côté formant un logement (12c) pour le pignon d'attaque (51) du différentiel (D), ledit pignon d'attaque (51) étant monté en porte à faux à l'extrémité avant du premier arbre secondaire (50), en avant du palier de centrage avant (58) dudit arbre (50).

11. Boîte de vitesses selon la revendication 9, **caractérisée par le fait que** le différentiel (D) sur lequel engrène le pignon d'attaque (51) est logé dans un boîtier constitué de deux parties appliquées l'une sur l'autre, respectivement une partie arrière (15) constituant une prolongation latérale du carter (C), et une partie avant opposée (16), constituant une prolongation latérale du couvercle (12) du carter.

12. Boîte de vitesses selon la revendication 10, **caractérisée par le fait que** le double embrayage (E) est logé dans un boîtier ayant un fond (14) appliqué sur la partie externe périphérique du couvercle (12) du carter (C) avec une partie centrale en saillie E1, qui reçoit les des deux arbres primaires (20, 30) et qui vient se loger dans la partie centrale (12a) en retrait du couvercle (12) du carter (C).

13. Boîte de vitesses selon les revendications 9 et 10, **caractérisée par le fait que** la partie périphérique (12b) du couvercle (12) du carter (C) est prolongée vers l'avant par une paroi latérale formant un espace creux centré sur l'axe central (O1) dans lequel est inséré le boîtier du double embrayage (E), et que la partie avant du boîtier du différentiel (D) constitue un côté de ladite paroi latérale entourant le double embrayage (E).

14. Boîte de vitesses selon l'une des revendications précédentes, **caractérisée par le fait que** le premier embrayage (40) et le second embrayage (41) constituent un double embrayage du type sec.

15. Boîte de vitesses selon l'une des revendications 1 à 13, **caractérisée par le fait que** le premier embrayage (40) et le second embrayage (41) constituent un double embrayage du type humide.

## Claims

1. Dual-clutch gearbox comprising, inside a casing, two groups of fixed pinions (21, 22, 23) (31, 32) borne respectively by two primary shafts slipped one inside the other, these respectively being a central shaft (20) and a tubular shaft (30) rotating about one and the same central axis (01) and each connected to a clutch (40, 41), and two secondary lines for operating a differential (D), each comprising a secondary shaft (50, 60) rotating about a secondary axis (02, 03), parallel to the central axis (01) and carrying a group of idling pinions, each idling pinion (52, 53, 55, 56) (63, 64) meshing with one of the fixed pinions (21, 22, 23) (31, 32) to determine a transmission ratio and being able to be secured removably to the shaft (50, 60) which bears it by a selective coupling member (100, 101, 102, 103) in which the action on the differential (D) is had by a single actuating pinion (51) mounted at one end of a first secondary shaft (50) and the second secondary shaft (60) rotates as one with this first secondary shaft (50), being secured by a kinematic link device comprising at least one transfer pinion (120) mounted freely about the central axis (01) on one of the two primary shafts (20, 30) and meshing with two pinions (54, 62) mounted fixedly respectively on each of the two secondary shafts (50, 60), in which the mechanism, consisting essentially of the said shafts and the said pinions is placed inside a casing (C) having a lid (12) forming a front face, an end wall (10) forming a rear face, and a side wall (11), **characterized in that** the transfer pinion (120) is mounted freely on the central primary shaft (20) between a rear end of the tubular primary shaft (30) and one of the said fixed pinions (21, 22, 23) of the central primary shaft (20).

2. Gearbox according to Claim 1, **characterized in that** the transfer pinion (120) is mounted between the first group of fixed pinions (21, 22, 23) which is mounted on the central primary shaft (20) and the second group of fixed pinions (31, 32) which is mounted on the tubular primary shaft (30).

3. Gearbox according to either one of the preceding claims, **characterized in that** the fixed pinion (54) that drives the rotation of the first secondary shaft (50) is mounted in a central part of the said first secondary shaft (50).

4. Gearbox according to Claim 1, **characterized in that** the second secondary shaft (60) comprises:
- a central part (60a) which is mounted so that it can rotate about the second secondary axis (03) at its ends, on two bearings, these respectively being a front bearing (93) and a rear bearing (65),
- a tubular external part (60b) which is slipped over the central part (60a), which is mounted such that it can rotate about the second secondary axis (03) on the central part (60a) by means of two rolling bearings (67, 68) and which extends between a rear end on which is mounted the fixed pinion (62) that meshes with the transfer pinion (120) and a front end, the said central part (60a) being able to be coupled with the said tubular external part (60b) by one of the said members (103) for selective coupling of the second secondary shaft (60).

5. Gearbox according to Claim 4, **characterized in that** the central part (60a) of the second secondary shaft (60) carries, at its rear end, a fixed drive pinion (61) which is interposed between the rear bearing (65) of the central part (60a) and the rear end of the tubular external part (60b) of the said second secondary shaft (60) and which meshes with a fixed pinion (23) of the central primary shaft (20) for transmitting a torque from the first clutch (40) to a driven shaft (A), passing in succession via the fixed pinion (23) of the central primary shaft (20), the said fixed pinion (61) of the central part (60a) of the second secondary shaft (60), the coupling member (103) for coupling the central part (60a) with the tubular part (60b) of the said second secondary shaft (60), the pinion (62) mounted fixedly on the said tubular part (60b), the transfer pinion (120), the fixed pinion (54) of the first secondary shaft (50) and the actuating pinion (51), the said fixed pinion (61) corresponding to the third-gear transmission ratio.

6. Gearbox according to Claims 1 and 5, **characterized in that** the second group of idling pinions (63, 64) which is carried by the second secondary shaft (60) comprises:
- an idling pinion (64) for operating reverse gear which is able to be coupled with the central part (60a) of the second secondary shaft (60) by the coupling member (103) that couples the central part (60a) with the tubular part (60b) of the said second shaft (60) and which corresponds to the reverse gear transmission ratio, and
- another idling pinion (63) which is able to be coupled to the tubular external part (60b) of the second secondary shaft (60) by another coupling member (102) and which corresponds to the fourth-gear transmission ratio.

7. Gearbox according to Claim 6, **characterized in that** the idling pinion (64) which operates reverse gear is kinematically connected to one of the said fixed pinions (32) of the tubular primary shaft (30) via a twin pinion (75) which rotates freely about a fourth axis (04) parallel to the central axis (01) and which carries two axially separated tooth sets, these respectively being a tooth set (77) that meshes with the reverse gear idling pinion (64) and a tooth set (72) that meshes with the said fixed pinion (32) of the tubular primary shaft (30).

8. Gearbox according to any one of the preceding claims, **characterized in that** the first secondary shaft (50) carries:
- a first selective coupling member (88) which is able selectively to couple two rear idling pinions (52, 53) of the first group of idling pinions (52, 53, 55, 56) on the associated first secondary shaft (50), the said two rear idling pinions (52, 53) being mounted to the rear of the fixed drive pinion (54) of the first secondary shaft (50) to determine the first-gear and fifth-gear transmission ratios;
- a second selective coupling member (89) which is capable selectively of coupling two front idling pinions (55, 56) of the first group of idling pinions (52, 53, 55, 56) on the associated first secondary shaft (50), the said two front idling pinions (55, 56) being mounted in front of the fixed drive pinion (54) of the first secondary shaft (50) to determine the sixth-gear and second-gear transmission ratios.

9. Gearbox according to Claim 1, **characterized in that** the said end wall (10) carries three rear centring bearings, these respectively being the bearings (27) for the central primary shaft (20) and the bearings (57, 65) for the two secondary shafts (50, 60), and the lid (12) carries three front centring bearings, these respectively being the bearings (36) for the tubular primary shaft (30) and the bearings (58, 93) for the two secondary shafts (50, 60) and **in that** the front centring bearing (36) for the tubular primary shaft (30) and the front bearing (58) for the first secondary shaft (50) are set back rearwards with respect to the front bearing (93) of the second secondary shaft (60) and are mounted on a front internal central part (10') of the casing (C), the front internal central part (10') being connected to the side wall (11) and forming a bearing face for a central part (12a) of the lid (12).

10. Gearbox according to Claim 9, **characterized in that** the lid (12) comprises a peripheral part (12b) which is positioned forward of the central part (12a) with, on each side of the central axis (01), a side that forms a housing for the front bearing (93) of the second secondary shaft (60) and a side that forms a housing (12c) for the actuating pinion (51) that acts on the differential (D), the said actuating pinion (51) being cantilever-mounted at the front end of the first secondary shaft (50) forward of the front centring bearing (58) of the said shaft (50).

11. Gearbox according to Claim 9, **characterized in that** the differential (D) with which the actuating pinion (51) meshes is housed in a housing consisting of two parts pressed together, these respectively being a rear part (15) constituting a lateral continuation of the casing (C), and an opposite front part (16) constituting a lateral continuation of the lid (12) of the casing.

12. Gearbox according to Claim 10, **characterized in that** the dual clutch (E) is housed in a housing that has an end wall (14) pressed against the peripheral external part of the lid (12) of the casing (C) with a projecting central part E1 which accepts the of the two primary shafts (20, 30) and which is housed in the set-back central part (12a) of the lid (12) of the casing (C).

13. Gearbox according to Claims 9 and 10,
**characterized in that** the peripheral part (12b) of the lid (12) of the casing (C) is extended forward by a side wall that forms a hollow space centred on the central axis (01) in which the housing of the dual clutch (E) is inserted, and **in that** the front part of the housing of the differential (D) constitutes one side of the said side wall surrounding the dual clutch (E).

14. Gearbox according to one of the preceding claims, **characterized in that** the first clutch (40) and the second clutch (41) form a dual clutch of the dry clutch type.

15. Gearbox according to one of Claims 1 to 13,
**characterized in that** the first clutch (40) and the second clutch (41) constitute a dual clutch of the wet clutch type.

## Patentansprüche

1. Doppelkupplungsgetriebe, das innerhalb eines Getriebegehäuses zwei Gruppen von starren Ritzeln (21, 22, 23) (31, 32), die je von zwei ineinandergeschobenen Primärwellen, einer Zentralwelle (20) bzw. einer Rohrwelle (30), getragen werden, die um die gleiche Zentralachse (01) drehen und je mit einer Kupplung (40, 41) verbunden sind, und zwei Sekundär-Antriebslinien eines Differentials (D) aufweist, die je eine Sekundärwelle (50, 60) aufweisen, die um eine Sekundärachse (02, 03) parallel zur Zentralachse (01) dreht und eine Gruppe von Freilaufritzeln trägt, wobei jedes Freilaufritzel (52, 53, 55, 56) (63, 64) mit einem der starren Ritzel (21, 22, 23) (31, 32) in Eingriff steht, um einen Gang des Getriebes zu bestimmen, und durch ein selektives Kopplungsorgan (100, 101, 102, 103) lösbar mit der es tragenden Welle (50, 60) starr verbunden werden kann, wobei der Antrieb des Differentials (D) von einem einzigen Antriebsritzel (51) durchgeführt wird, das an einem Ende einer ersten Sekundärwelle (50) montiert ist, und die zweite Sekundärwelle (60) mit dieser ersten Sekundärwelle (50) durch eine kinematische Verbindungseinrichtung in Drehung starr verbunden ist, die mindestens ein Umlenkritzel (120) aufweist, das um die Zentralachse (01) freilaufend auf eine der zwei Primärwellen (20, 30) montiert ist und mit zwei Ritzeln (54, 62) in Eingriff steht, die je auf jede der zwei Sekundärwellen (50, 60) starr montiert sind, wobei der hauptsächlich aus den Wellen und den Ritzeln bestehende Mechanismus innerhalb eines Getriebegehäuses (C) angeordnet ist, das einen Deckel (12), der eine Vorderseite bildet, einen Boden (10), der eine Rückseite bildet, und eine Seitenwand (11) hat, **dadurch gekennzeichnet, dass** das Umlenkritzel (120) auf die Primär-Zentralwelle (20) zwischen einem hinteren Ende der Primär-Rohrwelle (30) und einem der starren Ritzel (21, 22, 23) der Primär-Zentralwelle (20) freilaufend montiert ist.

2. Schaltgetriebe nach Anspruch 1, **dadurch gekennzeichnet, dass** das Umlenkritzel (120) zwischen der ersten Gruppe von starren Ritzeln (21, 22, 23), die auf die Primär-Zentralwelle (20) montiert ist, und der zweiten Gruppe von starren Ritzeln (31, 32) montiert ist, die auf die Primär-Rohrwelle (30) montiert ist.

3. Schaltgetriebe nach einem der vorhergehenden Ansprüche, **dadurch gekennzeichnet, dass** das starre Ritzel (54) für den Drehantrieb der ersten Sekundärwelle (50) in einem zentralen Teil der ersten Sekundärwelle (50) montiert ist.

4. Schaltgetriebe nach Anspruch 1, **dadurch gekennzeichnet, dass** die zweite Sekundärwelle (60) aufweist:
- einen zentralen Teil (60a), der um die zweite Sekundärachse (03) drehbar an seinen Enden auf zwei Lager, ein vorderes (93) und ein hinteres (65), montiert ist,
- einen auf den zentralen Teil (60a) aufgeschobenen äußeren rohrförmigen Teil (60b), der um die zweite Sekundärachse (03) drehbar mittels zweier Wälzlager (67, 68) auf den zentralen Teil (60a) montiert ist, und der sich zwischen einem hinteren Ende, auf das das starre Ritzel (62) montiert ist, das mit dem Umlenkritzel (120) in Eingriff steht, und einem vorderen Ende erstreckt, wobei der zentrale Teil (60a) über eines der selektiven Kopplungsorgane (103) der zweiten Sekundärwelle (60) mit dem äußeren rohrförmigen Teil (60b) gekoppelt werden kann.

5. Schaltgetriebe nach Anspruch 4, **dadurch gekennzeichnet, dass** der zentrale Teil (60a) der zweiten Sekundärwelle (60) an seinem hinteren Ende ein starres Antriebsritzel (61) trägt, das zwischen das hintere Lager (65) des zentralen Teils (60a) und das hintere Ende des rohrförmigen Außenteils (60b) der zweiten Sekundärwelle (60) eingefügt ist und mit einem starren Ritzel (23) der Primär-Zentralwelle (20) zur Übertragung eines Drehmoments von der ersten Kupplung (40) bis zu einer Abtriebswelle (A) in Eingriff steht, die nacheinander über das starre Ritzel (23) der Primär-Zentralwelle (20), das starre Ritzel (61) des zentralen Teils (60a) der zweiten Sekundärwelle (60), das Kopplungsorgan (103) des zentralen Teils (60a) mit dem rohrförmigen Teil (60b) der zweiten Sekundärwelle (60), das starr auf den rohrförmigen Teil (60b) montierte Ritzel (62), das Umlenkritzel (120), das starre Ritzel (54) der ersten Sekundärwelle (50) und das Antriebsritzel (51) geht, wobei das starre Ritzel (61) der Schaltstufe des dritten Gangs entspricht.

6. Schaltgetriebe nach den Ansprüchen 1 und 5,
**dadurch gekennzeichnet, dass** die zweite Gruppe von Freilaufritzeln (63, 64), die von der zweiten Sekundärwelle (60) getragen wird, aufweist:
- ein Freilaufritzel (64) zur Steuerung des Rückwärtsgangs, das mit dem zentralen Teil (60a) der zweiten Sekundärwelle (60) durch das Kopplungsorgan (103) des zentralen Teils (60a) mit dem rohrförmigen Teil (60b) der zweiten Welle (60) gekoppelt werden kann, und das der Schaltstufe des Rückwärtsgangs entspricht, und
- ein weiteres Freilaufritzel (63), das mit dem rohrförmigen Außenteil (60b) der zweiten Sekundärwelle (60) durch ein weiteres Kopplungsorgan (102) gekoppelt werden kann, und das der Schaltstufe des vierten Gangs entspricht.

7. Schaltgetriebe nach Anspruch 6, **dadurch gekennzeichnet, dass** das Freilaufritzel (64) zur Steuerung des Rückwärtsgangs kinematisch mit einem der starren Ritzel (32) der Primär-Rohrwelle (30) über ein Zwillingsritzel (75) verbunden ist, das freilaufend um eine vierte Achse (04) parallel zur Zentralachse (01) dreht, und das zwei axial beabstandete Zahnungen trägt, eine Zahnung (77), die mit dem Freilaufritzel (64) des Rückwärtsgangs in Eingriff steht, bzw. eine Zahnung (72), die mit dem starren Ritzel (32) der Primär-Rohrwelle (30) in Eingriff steht.

8. Schaltgetriebe nach einem der vorhergehenden Ansprüche, **dadurch gekennzeichnet, dass** die erste Sekundärwelle (50) aufweist:
- ein erstes selektives Kopplungsorgan (88), das selektiv zwei hintere Freilaufritzel (52, 53) der ersten Gruppe von Freilaufritzeln (52, 53, 55, 56) auf der zugeordneten ersten Sekundärwelle (50) koppeln kann, wobei die zwei hinteren Freilaufritzel (52, 53) hinter dem starren Antriebsritzel (54) der ersten Sekundärwelle (50) montiert sind, um die Schaltstufen des ersten und des fünften Gangs zu bestimmen;
- ein zweites selektives Kopplungsorgan (89), das selektiv zwei vordere Freilaufritzel (55, 56) der ersten Gruppe von Freilaufritzeln (52, 53, 55, 56) auf der zugeordneten ersten Sekundärwelle (50) koppeln kann, wobei die zwei vorderen Freilaufritzel (55, 56) vor dem starren Antriebsritzel (54) der ersten Sekundärwelle (50) montiert sind, um die Schaltstufen des sechsten und des zweiten Gangs zu bestimmen.

9. Schaltgetriebe nach Anspruch 1, **dadurch gekennzeichnet, dass** der Boden (10) drei hintere Zentrierlager trägt, nämlich (27) der Primär-Zentralwelle (20) und (57, 65) der zwei Sekundärwellen (50, 60), und der Deckel (12) drei vordere Zentrierlager trägt, nämlich (36) der Primär-Rohrwelle (30) und (58, 93) der zwei Sekundärwellen (50, 60), und dass das vordere Zentrierlager (36) der Primär-Rohrwelle (30) und das vordere Lager (58) der ersten Sekundärwelle (50) bezüglich des vorderen Lagers (93) der zweiten Sekundärwelle (60) nach hinten versetzt angeordnet und auf einen vorderen inneren zentralen Teil (10') des Getriebegehäuses (C) montiert sind, wobei der vordere innere zentrale Teil (10') mit der Seitenwand (11) verbunden ist und eine Auflageseite für einen zentralen Teil (12a) des Deckels (12) bildet.

10. Schaltgetriebe nach Anspruch 9, **dadurch gekennzeichnet, dass** der Deckel (12) einen Umfangsbereich (12b) aufweist, der vor dem zentralen Bereich (12a) mit zu beiden Seiten der zentralen Achse (01) einer Seite, die einen Sitz für das vordere Lager (93) der zweiten Sekundärwelle (60) bildet, und einer Seite, die einen Sitz (12c) für das Antriebsritzel (51) des Differentials (D) bildet, angeordnet ist, wobei das Antriebsritzel (51) freitragend am vorderen Ende der ersten Sekundärwelle (50) vor dem vorderen Zentrierlager (58) der Welle (50) montiert ist.

11. Schaltgetriebe nach Anspruch 9, **dadurch gekennzeichnet, dass** das Differential (D), mit dem das Antriebsritzel (51) in Eingriff steht, in einem Gehäuse angeordnet ist, das aus zwei aufeinandergelegten Teilen besteht, einem hinteren Teil (15), der eine seitliche Verlängerung des Getriebegehäuses (C) bildet, und einem gegenüberliegenden vorderen Teil (16), der eine seitliche Verlängerung des Deckels (12) des Getriebegehäuses bildet.

12. Schaltgetriebe nach Anspruch 10, **dadurch gekennzeichnet, dass** die Doppelkupplung (E) in einem Gehäuse angeordnet ist, dessen Boden (14) auf den äußeren Umfangsbereich des Deckels (12) des Getriebegehäuses (C) mit einem vorspringenden zentralen Bereich E1 aufgelegt ist, das die zwei Primärwellen (20, 30) aufnimmt und sich in den nach hinten versetzten zentralen Teil (12a) des Deckels (12) des Getriebegehäuses (C) einfügt.

13. Schaltgetriebe nach den Ansprüchen 9 und 10,
**dadurch gekennzeichnet, dass** der Umfangsbereich (12b) des Deckels (12) des Getriebegehäuses (C) nah vorne von einer Seitenwand verlängert wird, die einen auf die zentrale Achse (01) zentrierten Hohlraum bildet, in den das Gehäuse der Doppelkupplung (E) eingefügt ist, und dass der vordere Teil des Gehäuses des Differentials (D) eine Seite der die Doppelkupplung (E) umgebenden Seitenwand bildet.

14. Schaltgetriebe nach einem der vorhergehenden Ansprüche, **dadurch gekennzeichnet, dass** die erste Kupplung (40) und die zweite Kupplung (41) eine Doppelkupplung vom trockenen Typ bilden.

15. Schaltgetriebe nach einem der Ansprüche 1 bis 13, **dadurch gekennzeichnet, dass** die erste Kupplung (40) und die zweite Kupplung (41) eine Doppelkupplung vom feuchten Typ bilden.
